# EUROPEAN PATENT SPECIFICATION

(11) **EP 0 850 464 B1**
(45) Date of publication and mention of the grant of the patent: **20.10.1999**
(21) Application number: 96927814.2
(22) Date of filing: 19.08.1996
(51) Int. Cl.: G07C 5/12, G01P 1/12

(54) **TACHOGRAPH WITH PHASE CORRECTION**
TACHOGRAPH MIT PHASENKORREKTUR
TACHYGRAPHE A CORRECTION DE PHASE

(30) Priority: 15.09.1995 GB 9519045
(43) Date of publication of application: 01.07.1998
(73) Proprietor: TVI EUROPE LIMITED, Dundee DD2 3QJ (GB)
(72) Inventor: BORLAND, William, Graham, Dundee DD5 1PS (GB); LISLE, Michael, Edgar, Thomas, St. Andrews Fife KY16 9DA (GB)
(74) Representative: Carpmael, John William Maurice
(86) International application number: GB9602021
(87) International publication number: WO9710574

(56) References cited:
- EP-A- 0 186 557
- EP-A- 0 624 856
- DE-A- 4 321 642
- DE-C- 3 634 796
- DE-C- 3 716 486
- DE-C- 3 806 026

## Description

This invention relates to a tachograph and more particularly to a tachograph in which a correction can be made for any phase difference between the movement of a chart carrier (such as a turntable) and a time indicator (such as a clock) in order to ensure that time markings on a tachograph chart, moved by the carrier, correspond with the time on the indicator.

Current tachographs record, for example, speed, distance, driver duty and other vehicle information on a paper chart, which is mounted on a turntable, the turntable being rotated once, every 24 hours, by a mechanism which also drives the pointers of a conventional analog clock. (Sometimes the turntable is rotated once every 25½ hours, e.g. with tachographs used for 7-day recording periods.) The clock is normally mounted on the front of the tachograph case, so that it is clearly visible by the driver and the clock face is usually hinged to provide access to the turntable for inserting and removing charts. The turntable and the clock are mechanically linked so that they are driven synchronously and so that time markings on the chart (with respect to a time datum) are the same as the time indicated by the clock; any adjustment of the clock also being applied to the turntable. As the mechanisms of the clock and the tachograph are mounted in the same outer casing, sufficient room must be provided on the dashboard of the vehicle to accommodate such designs of tachograph. This imposes restrictions on thedesign of dashboards for manufacturers of commercial vehicles.

In view of the above, commercial vehicle manufacturers often request separation of the recording mechanisms of a tachograph from the display mechanisms so that, for example, a normal speedometer/odometer could be mounted on the dashboard, whilst the more cumbersome recording system could be mounted elsewhere, in a vehicle cab. This would greatly simplify dashboard design and allow for a lighter weight and smaller instrument panel. Resiting of the recording system could also make it more accessible for changing charts. In such a system, if the clock formed part of the display, it should conform to EEC 3821, which states that a driver must have a clear view, from the driver seat, of the speedometer, distance recorder and clock. However, if the clock is remote from the turntable, mechanical synchronisation is a problem and this can be difficult to achieve in a cost effective manner. Whilst electronic positioning and control is possible, for example, using a shaft encoder attached to the turntable, to determine its angular position, and by using this information to control the clock, such a system would be complex and expensive. The invention seeks to solve this problem in a more simple and cost effective manner.

DE-C-3634796 describes a tachograph comprising a mechanism for centering a chart with respect to a drive shaft, after being inserted through a slot. When the chart is aligned with the shaft, the chart is drivably engaged and rotated by a dc motor in order to correct any phase error. A different (stepper) motor is then used for driving the chart synchronously with time. Besides requiring a complicated arrangement for centering the chart on the drive shaft, this arrangement has a gear train which is permanently engaged and it is not possible for these gears to be out of mesh. It also requires two drive motors.

The invention is defined by the claims.

In the invention, the turntable is preferably rotated, about an axis, by (e.g.) a stepper motor.

The difference between the turntable position and real time can be described as a phase error. Phase errors can occur in various ways but within the context of one embodiment of the invention, a phase error occurs when the turntable is disengaged from the drive means to enable a chart to be inserted in the tachograph and made ready to record vehicle information. The tachograph is of a drawer-type of design, where the turntable can be slid, like a drawer, out of a casing, thereby disengaging the drive, to enable a chart to be placed on the turntable. The drawer is then closed to re-engage the drive and to enable recording to take place. Usually, the (circular) chart fits over a pear-shaped boss on the turntable, so as to orientate time markings on the chart with the angular position of the turntable (i.e. with respect to a time datum). The angular position is referenced to a time datum, usually the recording pens, so that when the chart is moved, time markings on the chart, represent the actual time, with respect to the datum. In some cases, this datum will be visible to the driver so that he can see immediately that the time markings on the chart "tell the correct time". However, this is not always possible, for example, in the case of the latter "drawer" construction, it would not then be possible to check that the turntable is correctly synchronised with time. If the angular position of the turntable is not "correct", because the time markings on the chart show a different time to that on the clock, the turntable would need to be rotated clockwise (or anti-clockwise) so as to bring the time markings on the chart into synchronism with the time shown on the clock, thereby reducing any phase error to zero. It would not be necessary to disengage the turntable drive to achieve this. For example, the turntable is usually driven by a stepper motor, having a shaft that rotates one step at a time (slowly) in order to rotate the turntable, through a given small are of movement, for each corresponding interval of time. This is a comparatively slow movement. However, in an embodiment of the invention, the stepper motor is driven (fast) continuously, so that the turntable then rotates quickly into the required position of corresponding time where it is driven synchronously. Besides rapidly synchronising the chart carrier drive, this embodiment enables any alteration in the time shown on the clock to be transferred automatically to the turntable. This is useful, for example, in moving from BST to GMT (and vice versa), when using the tachograph in summer and winter.

In the preferred embodiment of the invention, which employs a turntable as a chart carrier, the turntable is provided with means which represent different angular positions. Such means may be, for example, tabs or protuberances having different arc lengths, each of which represents a predetermined angular position. These tabs are arranged circumferentially about the axis of rotation and on the underside of the turntable. Opto-sensors produce beams which are intercepted by these tabs. When the turntable is rotated, the length of the tab is sensed so as to generate a signal which represents the respective angular position of the turntable. Alternatively, other angular or position sensing means may be employed. It would also be possible to read markings on the chart, so as to determine the position of the turntable. This enables the position of the carrier to be sensed with respect to real time, because the chart is always located on the turntable in a reference time position. For example, the chart has a pear-shaped hole that fits over a boss, having the same shape, on the turntable. Other means of referencing the chart to a reference time position could be used.

The time indicator can be a digital or an analog clock. The clock has an output, for example, pulses representing real time. However, any suitable inputs/outputs can be used which represent time. A microprocessor on-board the tachograph, receives inputs from the means for sensing chart carrier position and from the time indicator, and it then calculates any phase difference before producing an output signal to drive the turntable to its correct angular position. In the correct position, the time markings on the chart correspond with the real time shown by the clock.

An embodiment of the invention will now be described with reference to the accompanying drawings in which:
Fig. 1 is a perspective view of a drawer-type of tachograph in which the invention can be embodied,
Fig. 2 is a plan view of a turntable used in the tachograph of Fig. 1 and showing (in broken line) tabs on the underside of the turntable,
Fig. 3 is a section, on line 3-3 of Fig. 2.
Fig. 4 is a schematic circuit diagram.

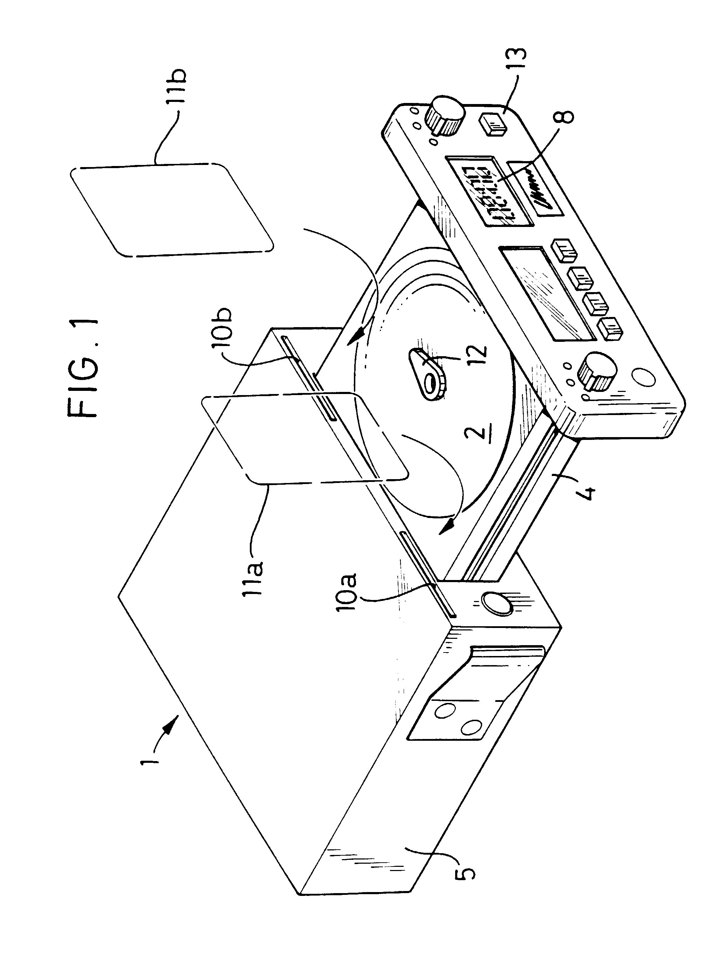

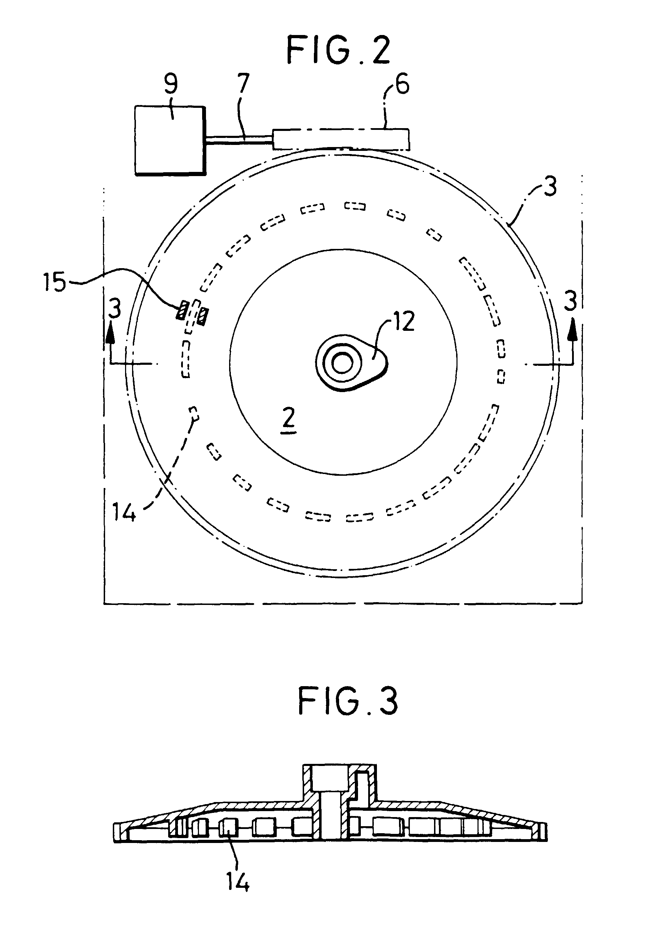

Referring to the drawings, a tachograph 1 comprises a turntable 2 which is rotatably supported on a slide or drawer 4 which slides into and out of a housing 5. The circumference of turntable 2 is provided with teeth 3 which engage worm gear 6, fast with a shaft 7. A stepper motor 9 rotates shaft 7 whereby turntable 2 moves through given angular increments. When the drawer 4 is open (Fig. 1) the teeth 3 are disengaged from worm gear 6. However, when the drawer 4 is closed, the teeth engage the worm gear 6 (Fig. 2).

A pear-shaped boss 12 fast with turntable 2 fits a similarly shaped hole in a tachograph chart (not shown) when placed on the turntable 2. The boss 12 ensures that each tachograph chart is located on the turntable 2 so that time markings on the chart are referenced to the same datum. This datum is usually, for example, the recording pen (or pens) with respect to which the turntable 2 rotates. Time markings on the periphery of the chart, opposite the datum, usually show the same time as a digital or analog clock on the fascia 13 of the tachograph. (A visible datum is not essential, because the turntable 2 rotates the chart (e.g. over a 12 or 24 hour cycle) with respect to any relatively fixed point. Rotation could also be over alternative periods, e.g. as in the case of using 7-day charts.)

Clock 8, which may have either an analogue or digital display, is of conventional construction and provides an indication, to the driver, of the time of day. It also provides an output representing the time, to a microprocessor (17) on board the tachograph. This output could be a pulse output which can be processed by microprocessor 17, but other timing signals may be used.

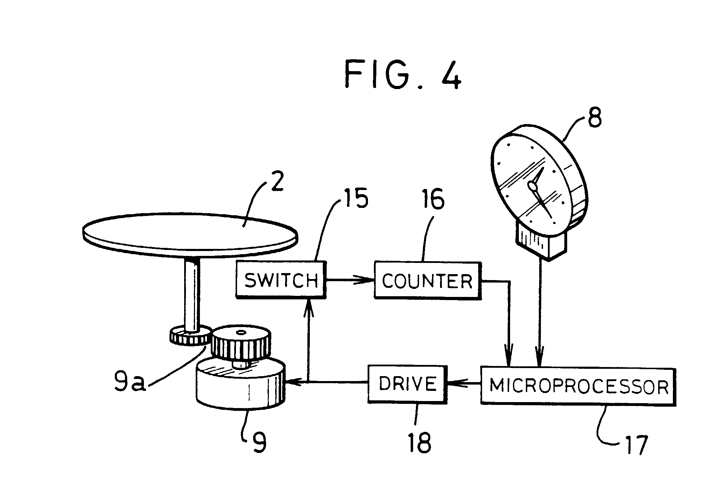

The underside of turntable 2 has a plurality of protuberances, tabs or flags 14, which have different arcuate lengths. The flags 14 pass between parts of an optical switch 15 (of known construction). Switch 15 may comprise, for example, a transmitter and a receiver whereby an optical beam is interrupted when one of the flags 14 passes by the switch 15 as the turntable 2 rotates. The switch 15 effectively turns a counter 16 (Fig. 4) on and off so that, as the flag 14 passes the switch the counter counts the number of drive pulses fed, via drive pulse generator 18, to the stepper motor 9. Thus, during the interval that the flag interrupts the beam, the length of the flag is effectively "measured". As the lengths of the flags are different and as each respective length represents the respective angular position of the turntable 2, with respect to a given datum, the angular position of the turntable 2 can be sensed and appropriate signal supplied to the on-board microprocessor 17. The microprocessor is programmed to determine if any phase error then exists between the angular position of the turntable 2 and the real time shown by the digital clock 8. If such an error exists, the microprocessor causes drive pulses to be sent from drive 18 to the stepper motor 9 to cause the turntable to be driven rapidly to a position at which the time markings on the tachograph chart correspond with the time shown on the digital clock 8, whereby the phase error is reduced to zero.

In practice, some intermediate portion of a flag may intercept the light beam of the opto-switch 15 when the turntable drive gearing 9a is re-engaged after closing the drawer. However, the microprocessor 17 is programmed to respond to this condition. For example, drive pulses can be generated and supplied to the stepper motor 9 so as to rotate the turntable first in a clockwise direction, until one end edge of the flag no longer interrupts the beam of the opto-switch. The stepper motor is then reversed to drive the turntable anti-clockwise to a position where the other end edge of the flag no longer interrupts the beam. The total length of the flag can thus be "measured" by the microprocessor 17 in terms of stepper motor drive pulses. Microprocessor 17 can be programmed so as to identify precisely the angular position of the turntable with respect to the number of drive pulses that correspond with the arcuate length of each tab and with respect to the angular position of each tab. The microprocessor can therefore cause the stepper motor to be pulsed until the turntable reaches the precise target position of time synchronisation. This target position can be located (or verified) by counting an appropriate number of stepper motor drive pulses from a leading edge of the flag nearest the target position to the actual target position (i.e. which may be intermediate the end edges of the flag). Thus, the microprocessor can first determine which is the nearest flag (approximate position) and then use the opto-switch, if required, to sense its leading edge before counting down an appropriate number of pulses from the leading edge to the target position.

The microprocessor 17 can also be programmed so that it determines which direction (clockwise or anti-clockwise) is the faster route for rotating the turntable from an "out-of-phase" to a "synchronised" target position.

Clearly, the microprocessor may be programmed to store data and to process pulses in different ways in order to cause the stepper motor to be driven continuously (faster) for rotating the turntable to a position synchronised with time. However, those skilled in the art of digital processing will understand how such processing can be used to perform respective embodiments of the invention.

A proximity switch (not shown) also responds to drawer closure so as to cause stepper motor 9 to be energised, in response to a microprocessor output, whereby the turntable 2 is rotated through a sufficient arc of rotation to enable the (nearest) flag 14 to be measured. Such rotation will also occur if a "gap" between the flags 14, is between switch 15. Reception of the light beam may be used, in this instance, to initiate a motor "on" signal to drive the turntable 2. (The length of arcuate gaps can alternatively be measured to determine turntable position.)

Slots 10a, 10b, on the front of case 5 receive respective cards 11a, 11b. These cards may be of different types, one preferably being a "smart card", which is capable of both recording information, as well as enabling information to be read. The cards 11a, 11b may contain information relating to the operation of a vehicle and, in particular, to identify and authorise of the driver. When either card 11a, 11b is inserted, a card reader (not shown) within the casing 5 scans the card and produces appropriate signals for use by the microprocessor. Data read from the smart card may include, for example, a time reference which "tells" the microprocessor 17 which time zone the vehicle is in. Thus, if the turntable is synchronised with GMT (which may be displayed on the clock 8), the microprocessor 17 will cause the turntable to be rotated by an appropriate angular amount to synchronise the tachograph chart markings with the real time in a country having a time zone different by, e.g. an integral number of hours from GMT. This (initial) phase correction is an "offset" for the respective time zone (or zones) in which the vehicle is driven and thus automatically compensates for time zone differences. The microprocessor may, in this case, run its own GMT clock for reference purposes. The offset can be taken into account with any phase error (due to disengaging the stepper motor drive) so that only one phase correction is made as described below.

In operation, the driver presses a button to cause the drawer to open and then places a tachograph chart on table 2. He then presses the button to cause the drawer to close and this movement causes worm gear 6 to engage with the teeth 3 on the periphery of turntable 2. (Alternatively, the drawer is manually closed and the button is used to open it.) The stepper motor 9 is then energised so as to cause the turntable 2 to rotate until one of the flags 14 intercepts the beam of light in the optical switch 15. At this point, a counter (not shown) is actuated in order to count the number of pulses supplied to the stepper motor as explained above. The digital clock 8 also provides an output representing the correct time and this information is used, by the microprocessor, together with the turntable position information, to calculate the number of steps that the stepper motor 9 has to make, so as to rotate the turntable 2 to its correct "in phase" position. The time markings on the chart correspond with the time shown on the clock 8 when the turntable is "in phase" with the clock.

The above form of tachograph imposes less restraints on the designer of a dashboard of a commercial vehicle. A further advantage is that the design greatly reduces the possible of tampering, by the driver, or some other person, since the chart is automatically rotated into the correct time position when the drawer 4 is closed.

## Claims

1. A tachograph comprising:
a time indicator (8);
a turntable (2) having means for drivably engaging a chart on which there are markings indicating time;
drive means (9,9a) for driving the turntable synchronously with the time indicator (8), so that the time indicated by the markings on the chart corresponds with the real time;
and synchronising means (14,15,17) for providing a correction signal for causing the turntable to move to a position corresponding with real time, thereby correcting any difference between the actual position of the turntable and its position corresponding with real time;
characterised in that the turntable is mounted on a drawer which can be moved out of a casing to a chart receiving position at which said drive means is disengaged from the turntable, and into the casing to a drive position at which said drive means is driveably engaged with the turntable; and that
said synchronising means senses the actual position of the turntable in its drive position, whereby the correction signal is used to cause the drive means to drive the turntable to a position corresponding with real time, and then to drive the turntable synchronously with the time indicator.

2. A tachograph according to Claim 1, wherein the turntable is driven faster by the drive means to said position corresponding with real time than when it is driven synchronously with the time indicator.

3. A tachograph according to any preceding Claim, wherein the drive means comprises a stepper motor (9) for rotating the turntable.

4. A tachograph according to Claim 3, wherein the turntable is provided with means (14) which represent different angular positions, the latter means being sensed to determine the position of the carrier.

5. A tachograph according to Claim 4 wherein the means which represent different angular positions have arcuate lengths which depend on the angular position of the turntable, said arcuate length being determined in order to determine said angular position.

6. A tachograph according to Claim 5 wherein tabs or protuberances (14) have said different arcuate lengths, said tabs or protuberances being arranged circumferentially about the axis of rotation of the turntable and intercepting a light beam in order to generate a pulse signal proportional to arcuate length and hence said angular position.

7. A tachograph according to any of Claims 4-6, wherein said synchronising means rotates the turntable both clockwise and anti-clockwise in order to determine initially said angular position.

8. A tachograph according to any of Claims 4-7 in which said synchronising means determines whether clockwise, or anti-clockwise rotation of the turntable would rotate the turntable, to said position corresponding with time, with the least angular rotation.

9. A tachograph according to any preceding claim including means fcr reading a card on which data is stored and from which data can be read, said data including an offset which corrects for a difference in time.

10. A tachograph according to any preceding claim in which the time indicator produces output pulses representing real time and further including a microprocessor which responds to said correction signal and said pulses and outputs a drive signal for causing said turntable to move to the position corresponding with real time.

## Patentansprüche

1. Tachograph (1), umfassend eine Zeitanzeige (8), einen Drehteller (2), der mit einer Einrichtung ausgestattet ist, die mit einer Diagrammscheibe, auf der sich Zeitmarkierungen befinden, in Antriebsverbindung bringbar ist, eine Antriebseinrichtung (9,9a) für den Antrieb des Drehtellers synchron zur Zeitanzeige (8), so daß die Zeitmarkierungen auf der Diagrammscheibe mit der Echtzeit übereinstimmen und eine Synchronisiereinrichtung (14, 15, 17) zum Bereitstellen eines Korrektursignals, das bewirkt, daß sich der Drehteller in eine Position bewegt, die der Echtzeit entspricht, um eine etwaige Differenz zwischen der tatsächlichen Position des Drehtellers und der Position, die der Echtzeit entspricht, zu korrigieren, dadurch gekennzeichnet, daß der Drehteller auf einem Einschub montiert ist, der aus einem Gehäuse herausbewegt werden kann in eine Position für die Aufnahme der Diagrammscheibe, in der der Antrieb von diesem Drehteller abgekoppelt ist, und der auch wieder in das Gehäuse hineinbewegt werden kann in eine Antriebsposition, in welcher die Antriebseinrichtung in Antriebsverbindung mit dem Drehteller steht und ihn antreiben kann und daß die Synchronisiereinrichtung die tatsächliche Position des Drehtellers in seiner Antriebsposition erfaßt und das Korrektursignal benützt wird, um die Antriebseinrichtung zu veranlassen, den Drehteller in eine mit der Echtzeit übereinstimmende Position zu bewegen und den Drehteller dann synchron mit der Zeitanzeige anzutreiben.

2. Tachograph gemäß Anspruch 1, wobei der Drehteller von der Antriebseinrichtung in diese mit der Echtzeit übereinstimmende Position schneller angetrieben wird als beim Antrieb synchron mit der Zeitanzeige.

3. Tachograph gemäß einem der vorhergehenden Ansprüche, wobei die Antriebseinrichtung einen Schrittmotor (9) für die Drehbewegung des Drehtellers enthält.

4. Tachograph gemäß Anspruch 3, wobei der Drehteller mit einer Einrichtung (14) versehen ist, die verschiedene Winkelpositionen darstellt, und wobei diese Einrichtung zur Bestimmung der Position des Diagrammscheibenträgers abgetastet wird.

5. Tachograph gemäß Anspruch 4, wobei die Einrichtung, die verschiedene Winkelpositionen darstellt, Bogenlängen aufweist, die von der Winkelposition des Drehtellers abhängen und wobei diese Bogenlänge zur Bestimmung der Winkelposition festgelegt ist.

6. Tachograph gemäß Anspruch 5, wobei Nasen oder Vorsprünge (14) diese unterschiedlichen Bogenlängen aufweisen und wobei diese Nasen oder Vorsprünge in Umfangsrichtung um die Drehachse des Drehtellers herum angeordnet sind und einen Lichtstrahl unterbrechen, um einen Signalimpuls proportional zur Bogenlänge und damit zu dieser Winkelposition zu erzeugen.

7. Tachograph gemäß einem der Ansprüche 4 bis 6, wobei die erwähnte Synchronisiereinrichtung den Drehteller sowohl im Uhrzeigersinn als auch im Gegenuhrzeigersinn dreht, um zunächst diese Winkelposition zu bestimmen.

8. Tachograph gemäß einem der Ansprüche 4 bis 7, wobei die erwähnte Synchronisiereinrichtung feststellt, ob eine Rotation des Drehtellers im Uhrzeigersinn oder im Gegenuhrzeigersinn den Drehteller in die mit der Zeit übereinstimmende Position mit dem kleinsten Rotationswinkel verdrehen würde.

9. Tachograph gemäß einem der vorhergehenden Ansprüche, einschließlich einer Einrichtung zum Lesen einer Karte, auf der Daten gespeichert sind und von der Daten gelesen werden können, wobei diese Daten auch einen Versatz zur Korrektur einer Zeitdifferenz einschließen.

10. Tachograph gemäß einem der vorhergehenden Ansprüche, wobei die Zeitanzeige Ausgangsimpulse erzeugt, die die Echtzeit darstellen, und wobei der Tachograph ferner einen Mikroprozessor einschließt, der auf dieses Korrektursignal und auf diese Impulse anspricht und ein Antriebssignal aussendet, das bewirkt, daß sich der erwähnte Drehteller in die Position bewegt, die der Echtzeit entspricht.

## Revendications

1. Tachygraphe comprenant :
un indicateur d'heure (8),
un plateau tourne-disque (2) comportant un moyen destiné à venir en prise d'entraînement avec un graphique sur lequel se trouvent des marques indiquant l'heure,
un moyen d'entraînement (9, 9a) destiné à entraîner le plateau tourne-disque de façon synchrone avec l'indicateur d'heure (8), de façon que l'heure indiquée par les marques sur le graphique corresponde à l'heure réelle,
et un moyen de synchronisation (14, 15, 17) destiné à fournir un signal de correction afin d'amener le plateau tourne-disque à se déplacer jusqu'à une position correspondant à l'heure réelle, en corrigeant ainsi toute différence entre la position en cours du plateau tourne-disque et sa position correspondant à l'heure réelle,
caractérisé en ce que le plateau tourne-disque est monté sur un tiroir qui peut être déplacé hors d'un boîtier jusqu'à une position de réception de graphique au niveau de laquelle ledit moyen d'entraînement est hors de prise avec le plateau tourne-disque, et vers l'intérieur du boîtier jusqu'à une position d'entraînement au niveau de laquelle ledit moyen d'entraînement est en prise d'entraînement avec le plateau tourne-disque et en ce que
ledit moyen de synchronisation détecte la position en cours du plateau tourne-disque dans sa position d'entraînement, grâce à quoi le signal de correction est utilisé afin d'amener le moyen d'entraînement à entraîner le plateau tourne-disque jusqu'à une position correspondant à l'heure réelle, et ensuite à entraîner le plateau tourne-disque de façon synchrone avec l'indicateur d'heure.

2. Tachygraphe selon la revendication 1, dans lequel le plateau tourne-disque est entraîné plus rapidement par le moyen d'entraînement vers ladite position correspondant à l'heure réelle que lorsqu'il est entraîné de façon synchrone avec l'indicateur d'heure.

3. Tachygraphe selon l'une quelconque des revendications précédentes, dans lequel le moyen d'entraînement comprend un moteur pas-à-pas (9) destiné à faire tourner le plateau tourne-disque.

4. Tachygraphe selon la revendication 3, dans lequel le plateau tourne-disque est muni de moyens (14) qui représentent des positions angulaires différentes, ces derniers moyens étant détectés afin de déterminer la position du plateau.

5. Tachygraphe selon la revendication 4, dans lequel les moyens qui représentent des positions angulaires différentes présentent des longueurs d'arcs qui dépendent de la position angulaire du plateau tourne-disque, ladite longueur d'arc étant déterminée de façon à déterminer ladite position angulaire.

6. Tachygraphe selon la revendication 5, dans lequel des ergots ou des protubérances (14) présentent lesdites longueurs d'arcs différentes, lesdits ergots ou protubérances étant agencés suivant la circonférence autour de l'axe de rotation du plateau tourne-disque, et interceptant un faisceau lumineux de manière à engendrer un signal d'impulsion proportionnel à la longueur d'arc et donc à ladite position angulaire.

7. Tachygraphe selon l'une quelconque des revendications 4 à 6, dans lequel ledit moyen de synchronisation fait tourner le plateau tournant à la fois dans le sens des aiguilles d'une montre et dans le sens inverse des aiguilles d'une montre pour pouvoir déterminer initialement ladite position angulaire.

8. Tachygraphe selon l'une quelconque des revendications 4 à 7, dans lequel ledit moyen de synchronisation détermine si une rotation dans le sens des aiguilles d'une montre, ou bien une rotation dans le sens inverse du plateau tourne-disque ferait tourner le plateau tourne-disque, jusqu'à ladite position correspondant à l'heure, avec la plus faible rotation angulaire.

9. Tachygraphe selon l'une quelconque des revendications précédentes, comprenant un moyen destiné à lire une carte sur laquelle des données sont mémorisées, et à partir de laquelle des données peuvent être lues, lesdites données comprenant un décalage qui corrige une différence d'heure.

10. Tachygraphe selon l'une quelconque des revendications précédentes, dans lequel l'indicateur d'heure produit des impulsions de sortie représentant l'heure réelle et comprenant en outre un microprocesseur qui répond audit signal de correction et auxdites impulsions et fournit en sortie un signal d'attaque destiné à amener ledit plateau tourne-disque à se déplacer jusqu'à la position correspondant à l'heure réelle.
